# EUROPÄISCHE PATENTSCHRIFT

(11) **EP 3 934 086 B1**
(45) Veröffentlichungstag und Bekanntmachung des Hinweises auf die Patenterteilung: **09.12.2026**
(21) Anmeldenummer: 21183387.6
(22) Anmeldetag: 02.07.2021
(51) Int. Cl.: H02M 5/458, H02M 1/00

(54) **ENERGIEVERSORGUNGSSYSTEM**
ENERGY SUPPLY SYSTEM
SYSTÈME D'ALIMENTATION ÉLECTRIQUE

(30) Priorität: 03.07.2020 AT 505692020
(43) Veröffentlichungstag der Anmeldung: 05.01.2022
(73) Patentinhaber: ABB Schweiz AG, 5400 Baden (CH)
(72) Erfinder: Blume, Sebastian, 5142 Eggelsberg (AT); Nesic, Stefan, 5142 Eggelsberg (AT); Vukovic, Djordje, 5142 Eggelsberg (AT)
(74) Vertreter: Weiss Patentanwalts GmbH

(56) Entgegenhaltungen:
- EP-A2- 2 159 908
- DE-A1- 102018 010 264
- FLERLAGE H ET AL: "ENERGIEVERSORGUNG VON DOPPELSTOCKWAGEN MIT MITTELFREQUENTER POTENZIALTRENNUNG//POWER SUPPLY OF DOUBLE-DECK CARS WITH MEDIUM-FREQUENCY ELECTRICAL ISOLATION//ALIMENTATION ENERGETIQUE DE VOITURES A DOUBLE ETAGE AVEC SEPARATION DE POTENTIEL A MOYENNE FREQUEN", EB- ELEKTRISCHE BAHNEN, DIV-DEUTSCHER INDUSTRIEVERLAG, DE, vol. 101, no. 12, 1 December 2003 (2003-12-01), pages 548 - 553, XP001185169, ISSN: 0013-5437

## Beschreibung

Die gegenständliche Erfindung betrifft ein Energieversorgungssystem, umfassend einen Gleichrichter, einen Niederspannungs-Wechselrichter und einen Niederspannungs-Aktor, wobei der Gleichrichter ausgestaltet ist eine Netz-Wechselspannung in eine Eingangs-Nieder-Gleichspannung zu wandeln, wobei der Niederspannungs-Wechselrichter mit dem Gleichrichter verbunden und ausgestaltet ist, die Eingangs-Nieder-Gleichspannung in eine Versorgungs-Nieder-Wechselspannung zu wandeln, und wobei der Niederspannungs-Wechselrichter mit dem Niederspannungs-Aktor verbunden ist, um den Niederspannungs-Aktor über die Versorgungs-Nieder-Wechselspannung mit Energie zu versorgen, wobei ein Gleichspannungswandler vorgesehen ist, welcher mit dem Gleichrichter verbunden und ausgestaltet ist, die Eingangs-Nieder-Gleichspannung in eine Klein-Gleichspannung zu wandeln, wobei ein Kleinspannungs-Wechselrichter vorgesehen ist, welcher mit dem Gleichspannungswandler verbunden und ausgestaltet ist, die Klein-Gleichspannung in eine Versorgungs-Klein-Wechselspannung zu wandeln, wobei der Kleinspannungs-Wechselrichter mit einem Kleinspannungs-Aktor verbunden ist, um den Kleinspannungs-Aktor über die Versorgungs-Klein-Wechselspannungmit Energie zu versorgen.

Gleichspannungen (DC) und Wechselspannungen (AC) werden gemeinhin in unterschiedliche Spannungsbereiche eingeteilt. Klein-Gleichspannungen liegen im Spannungsbereich von 0 bis 120 V DC, wobei entsprechend DVC-A (Decisive Voltage Classification A) auch 0 bis 60V DC vorgesehen sein können, vgl. Norm EN 61800-5-1. Klein-Wechselspannungen liegen im Bereich von 0 bis 50 V AC. Nieder-Gleichspannungen hingegen liegen im Bereich von 120 bis 1500 V DC und Nieder-Wechselspannungen im Bereich von 50 bis 1000 V AC. Hoch-Gleichspannungen liegen im Bereich von über 1500 V DC, Hoch-Wechselspannungen im Bereich von über 1000 V AC.

Die Netz-Wechselspannung eines Energieversorgungsnetzes liegt im Niederspannungsbereich, vorzugsweise bei 230 V AC, 400 V AC oder 480 V AC. Niederspannungs-Aktoren benötigen hingegen je nach Ausführung Versorgungs-Nieder-Wechselspannungen von 500 bis 800 V AC. Somit ist ein Energieversorgungssystem erforderlich, um die Netz-Wechselspannung in eine für die Niederspannungs-Aktoren geeignete Versorgungs-Nieder-Wechselspannung umzuwandeln, welche den Niederspannungs-Aktoren zur Verfügung gestellt werden kann. Es ist theoretisch möglich jeden Niederspannungs-Aktor mit einem oder mehreren Niederspannungs-Transformatoren Direktumrichtern direkt mit dem Energieversorgungsnetz zu verbinden. Diese Niederspannungs-Transformatoren bzw. Direktumrichter wandeln damit die Netz-Wechselspannung des Energieversorgungsnetzes zur Versorgung der Niederspannungs-Aktoren direkt in eine Versorgungs-Nieder-Wechselspannung, was natürlich nicht wirtschaftlich ist. Um eine kostengünstigere Topologie zu schaffen, sind in Energieversorgungssystemen zur Versorgung von Niederspannungs-Aktoren oftmals Gleichrichter vorgesehen. Der Gleichrichter wandelt die Netz-Wechselspannung in eine Eingangs-Nieder-Gleichspannung. Da der Niederspannungs-Aktor jedoch eine Versorgungs-Nieder-Wechselspannung benötigt, ist weiters ein Niederspannungs-Wechselrichter vorgesehen, welcher die Eingangs-Nieder-Gleichspannung in eine Versorgungs-Nieder-Wechselspannung wandelt. Die Versorgungs-Nieder-Wechselspannung wird wiederum dem zugehörigen Niederspannungs-Aktor zur Verfügung gestellt. Üblicherweise ist jedem Niederspannungs-Aktor ein Niederspannungs-Wechselrichter zugeordnet, wobei die Niederspannungs-Wechselrichter die Eingangs-Nieder-Gleichspannung vom selben Gleichrichter beziehen.

In Langstatorlinearmotoren, Planarmotoren, und kleineren rotativen Motoren etc. sind jedoch oftmals Kleinspannungs-Aktoren, welche für ihren Betrieb wiederum eine Versorgungs-Klein-Wechselspannung benötigen, verbaut. Somit ist in bekannten Energieversorgungssystemen oftmals ein weiterer Gleichrichter vorgesehen, welcher die Netz-Wechselspannung in eine Nieder-Gleichspannung wandelt, welche wiederum einem Kleinspannungs-Wechselrichter zur Verfügung gestellt wird. Der Kleinspannungs-Wechselrichter wandelt die die Nieder-Gleichspannung in eine Versorgungs-Nieder-Wechselspannung und stellt sie dem Kleinspannungs-Aktor zur Verfügung.

Flerlage et al. in EB-Elektrische Bahnen, DIV-Deutscher Industrieverlag, Band 101, Dez. 2003, Heft 12, Seiten 548-553 (ISSN:
0013-5437) beschreibt eine Spannungsversorgung für einen Zugwagen, wobei ein Gleichrichter, ein Niederspannungswechselrichter, ein Gleichspannungswandler, ein Gleichspannungswechselrichter, und die Aktuatoren offenbart sind. Flerlange er al. zeigt aber keine Umspeisung zwischen mehreren Aktuatoren.

Die Erfindung bezieht sich auf ein Energieversorgungssystem gemäß Vorrichtungsanspruch 1 und einem hierzu korrespondierendem Verfahrensanspruch 12. Vorteilhafte Ausführungsformen sind in den abhängigen Ansprüchen definiert.

Es ist eine Aufgabe der gegenständlichen Erfindung ein alternatives Energieversorgungssystem anzugeben, welches die Energieversorgung von Aktoren mit unterschiedlichen Versorgungsspannungen ermöglicht.

Diese Aufgabe wird erfindungsgemäß gelöst, indem der Kleinspannungs-Wechselrichter, der Gleichspannungswandler und der Niederspannungs-Wechselrichter bidirektional ausgeführt sind und vorgesehen sind, überschüssige Energie vom Kleinspannungs-Aktor in den Niederspannungs-Aktor oder vom Niederspannungs-Aktor in den Kleinspannungs-Aktor umzuspeisen.

Es wird somit einerseits der Niederspannungs-Aktor ausgehend von einer Netz-Wechselspannung (beispielsweise von einem Energieversorgungsnetz zur Verfügung gestellt) über den Gleichrichter und den Niederspannungs-Wechselrichter mit Energie versorgt und andererseits ein Kleinspannungs-Aktor über denselben Gleichrichter, den Gleichspannungswandler und den Kleinspannungs-Wechselrichter mit Energie versorgt. Da der Gleichspannungswandler die vom Gleichrichter zur Verfügung gestellte Eingangs-Nieder-Gleichspannung in die Klein-Gleichspannung wandelt, ist kein weiterer Gleichrichter, welcher die Netz-Wechselspannung in eine Klein-Gleichspannung wandelt, erforderlich. Der Gleichrichter ist vorzugsweise für eine Wandlung einer Netz-Wechselspannung von 220 bis 480 VAC ±10% in eine Eingangs-Nieder-Gleichspannung von 120 bis 1500 V DC vorzugsweise 250 bis 900 V DC, besonders vorzugsweise 500 bis 900 V DC ausgelegt. Damit kann das Energieversorgungssystem in vielen weltweit zur Verfügung stehenden Energieversorgungsnetzen (TT-Systeme, TN-S-Systeme, TN-C-S-Systeme mit dreiphasigen Netz-Wechselspannungen im Bereich von 220 bis 480 VAC ±10%) eingesetzt werden. Da die erforderliche Höhe der Eingangs-Nieder-Gleichspannung und Klein-Gleichspannung vorab bekannt ist, kann ein Gleichspannungswandler mit einem geringen Spannungsbereich verwendet werden. Damit ergibt sich zudem eine erhöhte Effizienz des Gleichspannungswandlers.

Vorzugsweise ist der Gleichspannungswandler über eine Versorgungsverbindung mit dem Niederspannungs-Wechselrichter verbunden, um den Niederspannungs-Wechselrichter durch die Klein-Gleichspannung mit Betriebsenergie zu versorgen. Der Niederspannungs-Wechselrichter benötigt, wie auch der Kleinspannungs-Wechselrichter, eine Versorgung mit Betriebsenergie, um eine grundlegende Funktion, d.h. die Versorgung von Steuereinheiten, Schalteinheiten etc. zu gewährleisten. Da an der Eingangsseite des Kleinspannungs-Wechselrichters bereits eine zu wandelnde Klein-Gleichspannung anliegt, wird diese Klein-Gleichspannung verwendet, um die Betriebsenergie des Kleinspannungs-Wechselrichters zu beziehen und eine Funktion selbigen sicherzustellen. Somit kann der Niederspannungs-Wechselrichter über die Versorgungsverbindung ebenso durch die Klein-Gleichspannung mit Betriebsenergie versorgt werden.

Der Gleichspannungswandler kann integraler Bestandteil des Gleichrichters sein, oder als eigenständige Einheit ausgeführt sein. Vorzugsweise ist der Gleichspannungswandler isoliert und/oder bidirektional ausgeführt.

Bidirektionale Gleichspannungswandler sind bekannt, werden jedoch bislang zur Energieversorgung von Batterien, unterbrechungsfreien Stromversorgungen (USV, englisch uninterruptible power supply - UPS) und batteriebetriebenen elektrischen Fahrzeugen (battery electric vehicle - BEV) verwendet. Bei der Versorgung von Batterien oder unterbrechungsfreien Stromversorgungen liegt eine Eingangs-Nieder-Gleichspannung (grundlegend 500 - 1000 V DC) an einer Eingangsseite vor und wird in eine Ausgangs-Klein-Gleichspannung (24-48 V DC) an einer Ausgangsseite gewandelt.

Vorzugsweise wird überschüssige Energie am Kleinspannungs-Aktor über den Kleinspannungs-Wechselrichter, den Gleichspannungswandler und über den Niederspannungs-Wechselrichter in den Niederspannungs-Aktor gespeist.

Sind der Kleinspannungs-Wechselrichter und der Gleichspannungswandler bidirektional ausgeführt, so ist nicht nur ein Energiefluss von der Eingangsseite des Gleichspannungswandlers (an welcher die Eingangs-Nieder-Gleichspannung anliegt) zur Ausgangsseite des Gleichspannungswandlers (an welcher die Klein-Gleichspannung anliegt) möglich, sondern auch von der Ausgangsseite zur Eingangsseite. Damit ist nicht nur ein Energiefluss vom Energieversorgungsnetz über den Gleichrichter und den Gleichspannungswandler und den Kleinspannungs-Wechselrichter zum Kleinspannungs-Aktor möglich, sondern auch ein Energiefluss vom Kleinspannungs-Aktor über den Kleinspannungs-Wechselrichter und den Gleichspannungswandler, d.h. zur Eingangs-Nieder-Gleichspannung - und damit wiederum über den Niederspannungs-Wechselrichter zum Niederspannungs-Aktor. Somit ist eine Energieübertragung vom Kleinspannungs-Aktor zum Niederspannungs-Aktor möglich, weshalb durch einen bidirektionalen Gleichspannungswandler die Effizienz des Systems erhöht wird, da Kleinspannungs-Aktoren, insbesondere in Langstatorlinearmotoren und Planarmotoren, oftmals ein dynamisches Lastprofil aufweisen. Damit kann an den Kleinspannungs-Aktoren, überschüssige Energie vorliegen, die z.B. durch einen Bremsvorgang erzeugt wurde.

Vorzugsweise wird überschüssige Energie am Kleinspannungs-Aktor über den Kleinspannungs-Wechselrichter, den Gleichspannungswandler und über den Gleichrichter in das Energieversorgungsnetz rückgespeist. Damit muss die die überschüssige Energie nicht vernichtet werden und geht somit nicht verloren, womit die Effizienz des Energieversorgungssystems steigt. Diese Rückspeisung ist insbesondere möglich, wenn der Kleinspannungs-Wechselrichter, der Gleichspannungswandler und der Gleichrichter bidirektional sind.

Ist der Gleichspannungswandler nicht bidirektional (d.h. unidirektional) ausgeführt, so kann am Kleinspannungs-Aktor vorliegende überschüssige Energie am Kleinspannungs-Aktor vernichtet werden. Ist jedoch ein bidirektionalen Kleinspannungs-Wechselrichter vorgesehen, so kann (bei unidirektionalem aber auch bei bidirektionalem Gleichspannungswandler) die überschüssige Energie auch auf die Klein-Zwischenspannung rückgewandelt und über weitere Kleinspannungs-Wechselrichter anderen Kleinspannungs-Aktoren zur Verfügung gestellt werden - oder falls eine Versorgungsverbindung zur Versorgung der Niederspannungs-Wechselrichter mit Betriebsenergie vorgesehen ist zumindest teilweise als Betriebsenergie verwendet werden.

Vorzugsweise wird überschüssige Energie am Niederspannungs-Aktor über den Niederspannungs-Wechselrichter über den Gleichspannungswandler und über den Kleinspannungs-Wechselrichter in den Kleinspannungs-Aktor gespeist und/oder überschüssige Energie am Niederspannungs-Aktor über den Niederspannungs-Wechselrichter und über den Gleichrichter in das Energieversorgungsnetz gespeist.

Ist der Niederspannungs-Wechselrichter bidirektional ausgeführt, so ist eine Energierückspeisung ausgehend vom Niederspannungs-Aktor möglich, wobei die Energie über einen bidirektionalen Gleichrichter in das Energieversorgungsnetz rückgespeist werden kann und/oder die Energie über den Gleichspannungswandler und den Kleinspannungs-Wechselrichter dem Kleinspannungs-Aktor zugeführt werden kann.

Vorzugsweise umfasst der Gleichspannungswandler eine Wechselrichtereinheit zum Wandeln der Eingangs-Nieder-Gleichspannung in eine Primärwechselspannung, eine Transformatoreinheit, welche mit der Wechselrichtereinheit verbunden ist, um die Primärwechselspannung in eine Sekundärwechselspannung zu transformieren, und eine Gleichrichtereinheit, welche mit der Transformatoreinheit verbunden ist, um die Sekundärwechselspannung in die Klein-Gleichspannung zu wandeln.

Um einen bidirektionalen Gleichspannungswandler anzugeben und die Anzahl der verwendeten elektronischen Komponenten gering zu halten, ist eine Ausführung als Dual-Active-Bridge vorteilhaft. Vorzugsweise ist die Dual-Active-Bridge einstufig ausgeführt und wird unter Verwendung einer Dreilevelmodulation angesteuert. Dabei kann durch die Eingangs-Nieder-Gleichspannung ein hoher Spannungsbereich abgedeckt werden, womit der Gleichspannungswandler über geeignete Gleichrichter an Energieversorgungsnetze mit unterschiedlichen Netz-Wechselspannungen angeschlossen werden kann. Weiters wird durch einen Gleichspannungswandler als Dual-Active-Bridge eine hohe Dynamik gewährleistet. Ist die Dual-Active-Bridge symmetrisch aufgebaut, d.h. die Gleichspannungs-Wechselspannungs-Brücke und Wechselspannungs-Gleichspannungs-Brücke gleich ausgeführt, so ist durch den Gleichspannungswandler eine Leistungssymmetrie gegeben, was bedeutet, dass in gleichem Maße Energie eingespeist, als auch rückgespeist werden kann. Der Leistungsbereich eines derartigen Gleichspannungswandlers beträgt vorzugsweise 2kW mit einer repetitiven Spitzenlastfähigkeit von 3kW.

Der Niederspannungs-Aktor kann Teil einer Kinematik, einer Werkzeugmaschine, oder eines rotativen Motors sein.

Der Kleinspannungs-Aktor kann Teil eines Langstatorlinearmotors, eines Planarmotors, oder eines rotativen Kleinspannungs-Motors sein.

Vorzugsweise ist eine erste Mehrzahl Kleinspannungs-Wechselrichter mit zugehörigen Kleinspannungs-Aktoren vorgesehen, wobei die erste Mehrzahl Kleinspannungs-Wechselrichter mit dem Gleichspannungswandler verbunden ist, um die Klein-Gleichspannung in eine jeweilige Versorgungs-Klein-Wechselspannung zu wandeln und die zugehörigen Kleinspannungs-Aktoren mit der Versorgungs-Klein-Wechselspannung zu versorgen. Damit kann die Klein-Gleichspannung als zentrale Anschlussstelle für die erste Mehrzahl Kleinspannungs-Wechselrichter und die zugehörigen Kleinspannungs-Aktoren dienen. Die Versorgungs-Klein-Wechselspannungen der jeweiligen Kleinspannungs-Aktoren können identisch oder unterschiedlich sein.

Vorzugsweise ist eine zweite Mehrzahl Niederspannungs-Wechselrichter mit zugehörigen Niederspannungs-Aktoren vorgesehen, wobei die zweite Mehrzahl Niederspannungs-Wechselrichter mit dem Gleichrichter verbunden ist, um die Eingangs-Nieder-Gleichspannung in eine jeweilige Versorgungs-Nieder-Wechselspannung zu wandeln und jeweils die zugehörigen Niederspannungs-Aktoren mit der Versorgungs-Nieder-Wechselspannung zu versorgen. Damit kann die Eingangs-Nieder-Gleichspannung als zentrale Anschlussstelle für die erste Mehrzahl Niederspannungs-Wechselrichter und die zugehörigen Niederspannungs-Aktoren dienen. Die Versorgungs-Nieder-Wechselspannungen der jeweiligen Niederspannungs-Aktoren können identisch oder unterschiedlich sein.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
- Fig.1: ein Energieversorgungssystem nach dem Stand der Technik,
- Fig.2: ein erfindungsgemäßes Energieversorgungssystem,
- Fig.3: ein Energieversorgungssystem mit einer Versorgungsverbindung,
- Fig.4: ein Energieversorgungssystem mit mehreren Wechselrichtern und Aktoren,
- Fig.5: eine bevorzugte Ausführung eines Gleichspannungswandlers.

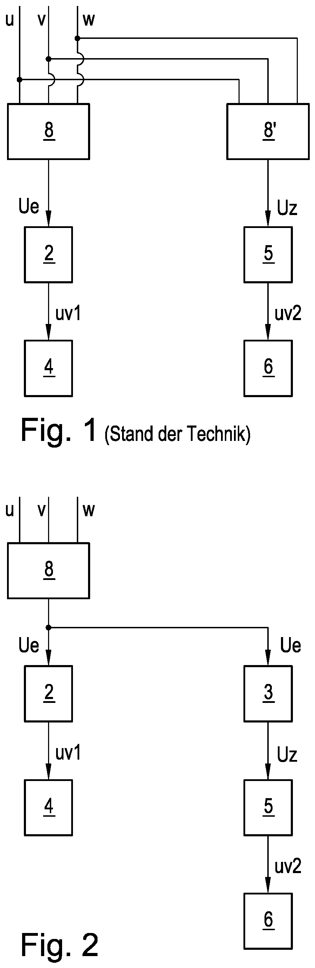

Fig. 1 stellt ein Energieversorgungssystem 1 nach dem Stand der Technik dar. Es ist ein Niederspannungs-Aktor 4 vorgesehen, welcher mit einer Versorgungs-Nieder-Wechselspannung uv1 (z.B. im Bereich von 50 bis 1000 V AC, vorzugsweise im Bereich von 500 bis 800 V AC) versorgt wird. Der Niederspannungs-Aktor 4 kann beispielsweise Teil einer Kinematik, einer Werkzeugmaschine oder eines rotativen Motors, etc. sein.

Weiters ist ein Kleinspannungs-Aktor 6 vorgesehen, welcher mit einer Versorgungs-Klein-Wechselspannung uv2 (z.B. im Bereich von 0 bis 50 V AC) versorgt wird. Der Kleinspannungs-Aktor 6 kann Teil eines Langstatorlinearmotors, eines Planarmotors, eines rotativen Motors (jeweils ausgelegt für eine Versorgungs-Klein-Wechselspannung uv2) etc. sein.

Um die Versorgungs-Nieder-Wechselspannung uv1 zur Verfügung zu stellen, ist ein Niederspannungs-Wechselrichter 2 vorgesehen, welcher mit dem Niederspannungs-Aktor 4 verbunden ist und somit den Niederspannungs-Aktor 4 mit der Versorgungs-Nieder-Wechselspannung uv1 versorgt. Um andererseits die Versorgungs-Klein-Wechselspannung uv2 zur Verfügung zu stellen, ist ein Kleinspannungs-Wechselrichter 5 vorgesehen, welcher mit dem Kleinspannungs-Aktor 6 verbunden ist und somit den Kleinspannungs-Aktor 6 mit der Versorgungs-Klein-Wechselspannung uv2 versorgt.

Es ist weiters ein Gleichrichter 8 vorgesehen, welcher ausgestaltet ist eine (hier dreiphasige) Netz-Wechselspannung u, v, w in die Eingangs-Nieder-Gleichspannung Ue (120 bis 1500 V DC) zu wandeln. Die Netz-Wechselspannung u, v, w liegt vorzugsweise als Nieder-Wechselspannung vor (d.h. im Bereich von 50 bis 1000 V AC) und wird beispielsweise von einem Energieversorgungsnetz zur Verfügung gestellt.

Der Gleichrichter 8 ist mit dem Niederspannungs-Wechselrichter 2 verbunden und versorgt diesen mit der Eingangs-Nieder-Gleichspannung Ue. Der Niederspannungs-Wechselrichter 2 wandelt die Eingangs-Nieder-Gleichspannung Ue in die Versorgungs-Nieder-Wechselspannung uv1, welche dem Niederspannungs-Aktor 4 zur Verfügung gestellt wird.

Der Kleinspannungs-Wechselrichter 5 benötigt jedoch eine Eingangs-Klein-Gleichspannung Uz, um diese in eine Versorgungs-Klein-Wechselspannung uv2 (0 bis 50 V AC) zu wandeln und dem Kleinspannungs-Aktor 6 zur Verfügung zu stellen. Daher ist ein weiterer Gleichrichter 8' vorgesehen, welcher ausgestaltet ist die Netz-Wechselspannung u, v, w in die Klein-Gleichspannung Uz (im Bereich von 0 bis 120 V DC, vorzugsweise von 24 bis 60 V DC) zu wandeln. Somit stellt der weitere Gleichrichter 8' dem Kleinspannungs-Wechselrichter die Klein-Gleichspannung Uz zur Verfügung. Der Kleinspannungs - Wechselrichter 5 wandelt die Eingangs-Klein-Gleichspannung Uz in die Versorgungs-Klein-Wechselspannung uv2, welche dem Kleinspannungs-Aktor 6 zur Verfügung gestellt wird.

Zusammengefasst wird in Fig. 1 der Niederspannungs-Aktor 4 über den Gleichrichter 8 und den Niederspannungs-Wechselrichter 2 mit Energie versorgt, wogegen der Kleinspannungs-Aktor 4 über den weiteren Gleichrichter 8' und den Kleinspannungs-Wechselrichter 2 mit Energie versorgt wird.

Dem gegenüber ist in Fig. 2 ein erfindungsgemäßes Energieversorgungssystem 1 dargestellt. Es ist wie in Fig. 1 ein Gleichrichter 8 vorgesehen, welcher ausgestaltet ist, eine Netz-Wechselspannung u, v, w in eine Eingangs-Nieder-Gleichspannung Ue (120 bis 1500 V DC) zu wandeln. Weiters wird, wie in Fig. 1 die Eingangs-Nieder-Gleichspannung Ue von einem Niederspannungs-Wechselrichter 2 in eine Versorgungs-Nieder-Wechselspannung uv1 (im Bereich von 50 bis 1000 V AC, vorzugsweise im Bereich von 560 bis 800 V AC) gewandelt und einem Niederspannungs-Aktor 4 zur Verfügung gestellt wird.

Im Gegensatz zu Fig. 1 ist in Fig. 2 zur Energieversorgung des Kleinspannungs-Aktors 6 jedoch erfindungsgemäß ein Gleichspannungswandler 3 vorgesehen, welcher mit dem Gleichrichter 8 und mit dem Kleinspannungs-Wechselrichter 5 verbunden ist. Der Gleichspannungswandler 3, welcher integraler Bestandteil des Gleichrichters 8 sein kann, ist ausgestaltet, die vom Gleichrichter 8 zur Verfügung gestellte Eingangs-Nieder-Gleichspannung Ue in eine Klein-Gleichspannung Uz (im Bereich von 0 bis 120 V DC, vorzugsweise 0 bis 60 V DC) zu wandeln. Die Klein-Gleichspannung wird dem Kleinspannungs-Wechselrichter 5 vom Gleichspannungswandler 3 zur Verfügung gestellt. Der Kleinspannungs-Wechselrichter 5 selbst ist wiederum mit dem Kleinspannungs-Aktor 6 verbunden und entsprechend ausgestaltet die Klein-Gleichspannung Uz in eine Versorgungs-Klein-Wechselspannung uv2 (im Bereich von 0 bis 50 V AC) zu wandeln und dem Kleinspannungs-Aktor 6 zur Verfügung zu stellen.

Damit kann auf einen weiteren Gleichrichter 8' zur Energieversorgung des Kleinspannungs-Wechselrichters 5 verzichtet werden. Der Kleinspannungs-Aktor 6 wird vielmehr über den bereits vorhandenen Gleichrichter 8, den Gleichspannungswandler 3 und schlussendlich den Kleinspannungs-Wechselrichter 5 mit Energie versorgt.

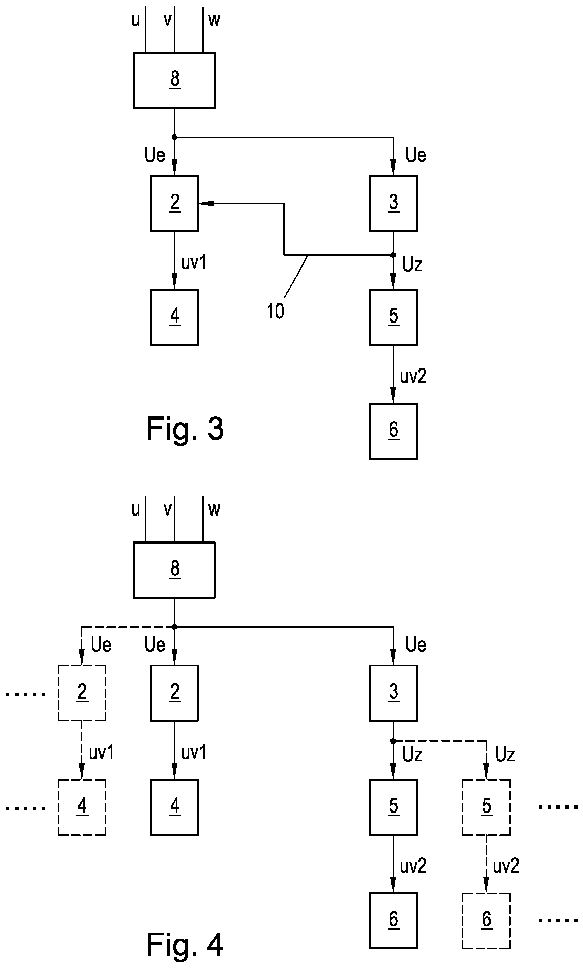

Jeder Wechselrichter benötigt für seine Funktion, d.h. die Versorgung von zugehörigen Steuereinheiten, Schalteinheiten etc. eine Betriebsenergie. Der Kleinspannungs-Wechselrichter 5 kann die bereits auf seiner Eingangsseite vorhandene Klein-Gleichspannung Uz heranziehen, und daraus seine Betriebsenergie beziehen. Vorzugsweise ist die Ausgangseite des Gleichspannungswandlers 3 nicht nur mit der Eingangsseite des Kleinspannungs-Wechselrichters 2 verbunden, sondern auch über eine Versorgungsverbindung 10 mit dem Niederspannungs-Wechselrichter 2, wie es in Fig. 3 dargestellt ist. Anhand der Versorgungsverbindung 10 wird der Niederspannungs-Wechselrichter 2 durch die Klein-Gleichspannung Uz mit Betriebsenergie versorgt.

Die Nieder-Gleichspannung Ue kann vom Gleichrichter 8 auch mehreren Niederspannungs-Wechselrichtern 2 zur Verfügung gestellt werden, wobei die mehreren Niederspannungs-Wechselrichtern 2 jeweils wieder Niederspannungs-Aktoren 4 mit Versorgungs-Nieder-Wechselspannungen uv1 versorgen. Ebenso kann die Klein-Gleichspannung Uz vom Gleichspannungswandler 3 mehreren Kleinspannungs-Wechselrichtern 5 zur Verfügung gestellt werden, wobei die mehreren Kleinspannungs-Wechselrichtern 5 jeweils wieder Kleinspannungs-Aktoren 6 mit Versorgungs-Nieder-Wechselspannungen uv1 versorgen. Eine derartiges Energieversorgungssystem 1 ist schematisch in Fig. 4 dargestellt.

Der Niederspannungs-Wechselrichter 2 und der Kleinspannungs-Wechselrichter 5 sind bidirektional ausgeführt. Ebenso ist auch der Gleichrichter 8 bidirektional ausgeführt. Gleiches gilt für den Gleichspannungswandler 3, der bidirektional und isoliert ausgeführt ist.

Damit kann überschüssige Energie vom Kleinspannungs-Aktor 6 über den Kleinspannungs-Wechselrichter 5 und weiter über den Gleichspannungswandler 3 in das Energieversorgungsnetz rückgespeist werden. Es kann überschüssige Energie vom Kleinspannungs-Aktor 6 aber auch über den Kleinspannungs-Wechselrichter 5, den Gleichspannungswandler 3 und weiter über den Niederspannungs-Wechselrichter 2 in den Niederspannungs-Aktor 4 umgespeist werden. Natürlich kann auch überschüssige Energie vom Niederspannungs-Aktor 4 über den Niederspannungs-Wechselrichter 2 den Gleichspannungswandler 3 und den Kleinspannungs-Wechselrichter 5 in den Kleinspannungs-Aktor 4 umgespeist werden, oder vom Niederspannungs-Aktor 4 über den Niederspannungs-Wechselrichter 2 und den Gleichrichter 8 in das Energieversorgungsnetz rückgespeist werden.

Vorzugsweise umfasst der Gleichspannungswandler 3 eine Wechselrichtereinheit 30 zum Wandeln der Eingangs-Nieder-Gleichspannung in eine Primärspannung ue1 (und umgekehrt), eine Transformatoreinheit 3, welche mit der Wechselrichtereinheit 30 verbunden ist, um die Primärwechselspannung ue1 in eine Sekundärwechselspannung ue2 zu transformieren (und umgekehrt), und eine Gleichrichtereinheit 32, welche mit der Transformatoreinheit 31 verbunden ist, um die eine Sekundärwechselspannung ue2 in die Klein-Gleichspannung Uz zu wandeln (und umgekehrt).

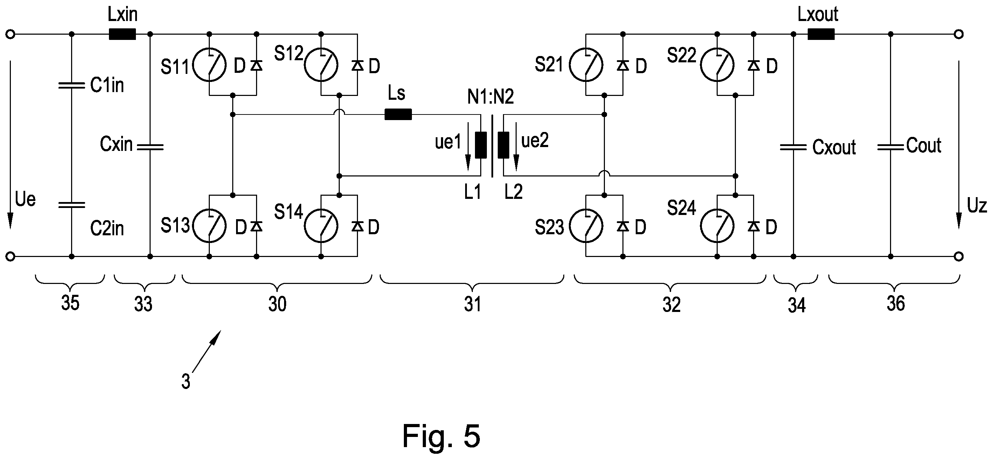

Eine besonders vorteilhafte Ausgestaltung des Gleichspannungswandlers 3 ist in Fig. 5 dargestellt. Die Wechselrichtereinheit 30 ist dabei vorteilhafterweise als Gleichspannungs/Wechselspannungsbrücke ausgeführt und umfasst einen ersten Primärseiten-Brückenzweig mit einem ersten Primärseiten-Leistungsschalter S11 und einem in Serie geschalteten dritten Primärseiten-Leistungsschalter S13. Die Gleichspannungs/Wechselspannungsbrücke umfasst weiters einen zweiten Primärseiten-Brückenzweig mit einem zweiten Primärseiten-Leistungsschalter S12 und einen in Serie geschalteten vierten Primärseiten-Leistungsschalter S14. Der erste Primärseiten-Brückenzweig und zweite Primärseiten-Brückenzweig sind jeweils parallel zur Eingangs-Nieder-Gleichspannung Ue geschaltet. Zu allen Primärseiten-Leistungsschaltern S11, S12, S13, S14 ist jeweils eine Diode parallelgeschaltet, welche entgegen der Eingangs-Nieder-Gleichspannung Ue durchlässig gepolt ist. Die Primärseiten-Leistungsschalter S11, S12, S13, S14 werden von einer Primär-Steuereinheit (nicht dargestellt) derart angesteuert, dass die Primärwechselspannung ue1 zwischen dem Verbindungspunkt des ersten Primärseiten-Leistungsschalters S11 und dritten Primärseiten-Leistungsschalters S13 und dem Verbindungspunkt des zweiten Primärseiten-Schalters S12 und vierten Primärseiten-Leistungsschalters S14 abgegriffen werden kann.

Die Primärwechselspannung u1 wird an einer Primärwindung L1 der Transformatoreinheit 31 angelegt. In Fig. 5 ist auch eine Streuinduktivität Ls in Serie zur Primärwindung dargestellt. Die Transformatoreinheit 31 transformiert die Primärwechselspannung ue1 entsprechend des Übersetzungsverhältnisses N1:N2 in eine Sekundärwechselspannung ue2.

Weiters ist die Gleichrichtereinheit 32 vorteilhafterweise als Wechselspannungs/Gleichspannungsbrücke ausgeführt. Die Wechselspannungs/Gleichspannungsbrücke umfasst einen weiteren ersten Sekundär-Brückenzweig mit einem ersten Sekundär-Leistungsschalter S21 und einen in Serie geschalteten dritten Sekundär-Leistungsschalter S23. Weiters umfasst die Wechselspannungs/Gleichspannungsbrücke und einen weiteren, zum ersten Sekundär-Brückenzweig parallel geschalteten zweiten Sekundär-Brückenzweig mit einem zweiten Sekundär-Leistungsschalter S22 und einen in Serie geschalteten vierten Sekundär-Leistungsschalter S24. Die Sekundärwechselspannung ue2 der Transformatoreinheit 31 liegt zwischen dem Verbindungspunkt des ersten Sekundär-Leistungsschalters S21 und dritten Sekundär-Leistungsschalters S23 und dem Verbindungspunkt des zweiten Sekundär-Leistungsschalters S22 und vierten Sekundär-Leistungsschalters S24 an. Die Sekundär-Leistungsschalter S21, S22, S23, S24 werden von einer Sekundär-Steuereinheit (nicht dargestellt) derart angesteuert, dass die Sekundärwechselspannung ue2 in eine zum ersten und zweiten Sekundär-Brückenzweig parallel anliegende Klein-Gleichspannung Uz gewandelt wird. Die Primär-Steuereinheit und Sekundär-Steuereinheit können natürlich auch integraler Bestandteil einer Gleichspannungswandler-Steuereinheit sein. Zu allen Sekundär-Leistungsschaltern S21, S22, S23, S24 ist jeweils eine Diode parallelgeschaltet, welche entgegen der Klein-Gleichspannung Uz durchlässig gepolt ist.

Der dargestellte Gleichspannungswandler 3 ist bidirektional ausgeführt, d.h. es ist möglich die Eingangs-Nieder-Gleichspannung Ue in die Klein-Gleichspannung Uz zu wandeln und umgekehrt. Damit ist ein Energietransport von der Ausgangsseite des Gleichspannungswandlers 3 zur Eingangsseite und umgekehrt möglich. Wird die Klein-Gleichspannung Uz in die Eingangs-Nieder-Gleichspannung Ue gewandelt, so fungiert die Gleichrichtereinheit 32 auch als Wechselrichtereinheit, d.h. im dargestellten Ausführungsbeispiel die Wechselspannungs/Gleichspannungsbrücke auch als Gleichspannungs/Wechselspannungsbrücke. Ebenso fungiert die Wechselrichtereinheit 30 auch als Gleichrichtereinheit, d.h. im dargestellten Ausführungsbeispiel die Gleichspannungs/Wechselspannungsbrücke auch als Wechselspannungs/Gleichspannungsbrücke.

Die Verwendung einer isolierten Transformatoreinheit 31 sorgt für eine Isolierung der Eingangsseite des Gleichspannungswandlers 3 gegenüber der Ausgangsseite des Gleichspannungwandlers 3.

Weiters weist der Gleichspannungswandler 3 optionale Eingangskapazitäten C1in, C2in, die parallel zur Eingangs-Nieder-Gleichspannung Ue geschaltet sind, sowie eine optionale Ausgangskapazität Cout, die die parallel zur Klein-Gleichspannung Uz geschaltet sind. Ebenso ist eine optionale serielle Eingangsfilterinduktivität Lxin vorgesehen, sowie eine optionale parallele Eingangsfilterkapazität Cxin. Weiters sind eine optionale serielle Ausgangsfilterinduktivität Lxout und eine optionale parallele Ausgangsfilterkapazität Cxout dargestellt.

Um für Eingangs-Nieder-Gleichspannungen Ue bis 900V zu einsatzfähig zu sein, können die Primär-Leistungsschalter S11, S12, S13, S14 mit einer Sperrfähigkeit bis 1200V eingesetzt werden. Um eine hohe Effizienz zu erzielen wird vorzugsweise Siliziumcarbid als Halbleitermaterial der Primär-Leistungsschalter S11, S12, S13, S14 verwendet.

## Patentansprüche

1. Energieversorgungssystem (1), umfassend einen Gleichrichter (8), einen Niederspannungs-Wechselrichter (2) und einen Niederspannungs-Aktor (4), wobei der Gleichrichter (8) ausgestaltet ist, eine Netz-Wechselspannung (u, v, w) in eine Eingangs-Nieder-Gleichspannung (Ue) zu wandeln, wobei der Niederspannungs-Wechselrichter (2) mit dem Gleichrichter (8) verbunden und ausgestaltet ist, die Eingangs-Nieder-Gleichspannung (Ue) in eine Versorgungs-Nieder-Wechselspannung (uv1) zu wandeln, und wobei der Niederspannungs-Wechselrichter (2) mit dem Niederspannungs-Aktor (4) verbunden ist, um den Niederspannungs-Aktor (4) über die Versorgungs-Nieder-Wechselspannung (uv1) mit Energie zu versorgen, wobei ein Gleichspannungswandler (3) vorgesehen ist, welcher mit dem Gleichrichter (8) verbunden und ausgestaltet ist, die Eingangs-Nieder-Gleichspannung (Ue) in eine Klein-Gleichspannung (Uz) zu wandeln, wobei ein Kleinspannungs-Wechselrichter (5) vorgesehen ist, welcher mit dem Gleichspannungswandler (3) verbunden und ausgestaltet ist, die Klein-Gleichspannung (Uz) in eine Versorgungs-Klein-Wechselspannung (uv2) zu wandeln, wobei der Kleinspannungs-Wechselrichter (5) mit einem Kleinspannungs-Aktor (6) verbunden ist, um den Kleinspannungs-Aktor (6) über die Versorgungs-Klein-Wechselspannung (uv2) mit Energie zu versorgen, **dadurch gekennzeichnet, dass** der Kleinspannungs-Wechselrichter (5), der Gleichspannungswandler (3) und der Niederspannungs-Wechselrichter (2) bidirektional ausgeführt sind und vorgesehen sind, überschüssige Energie vom Kleinspannungs-Aktor (6) in den Niederspannungs-Aktor (4) oder vom Niederspannungs-Aktor (4) in den Kleinspannungs-Aktor (6) umzuspeisen.

2. Energieversorgungssystem (1) nach Anspruch 1, **dadurch gekennzeichnet, dass** der Gleichspannungswandler (3) über eine Versorgungsverbindung (10) mit dem Niederspannungs-Wechselrichter (2) verbunden ist, um den Niederspannungs-Wechselrichter (2) durch die Klein-Gleichspannung (Uz) mit Betriebsenergie zu versorgen.

3. Energieversorgungssystem (1) nach Anspruch 1 oder 2, **dadurch gekennzeichnet, dass** der Gleichspannungswandler (3) integraler Bestandteil des Gleichrichters (8) ist.

4. Energieversorgungssystem (1) nach einem der Ansprüche 1 bis 3, **dadurch gekennzeichnet, dass** der Gleichspannungswandler (3) isoliert ausgeführt ist.

5. Energieversorgungssystem (1) nach einem der Ansprüche 1 bis 4, **dadurch gekennzeichnet, dass** der Gleichspannungswandler (3) eine Wechselrichtereinheit (30) zum Wandeln der Eingangs-Nieder-Gleichspannung (Ue) in eine Primärspannung (ue1) umfasst, dass der Gleichspannungswandler (3) eine Transformatoreinheit (31) umfasst, welche mit der Wechselrichtereinheit (30) verbunden ist, um die Primärwechselspannung (ue1) in eine Sekundärwechselspannung (ue2) zu transformieren, **und dass** der Gleichspannungswandler (3) eine Gleichrichtereinheit (32) umfasst, welche mit der Transformatoreinheit (31) verbunden ist, um die Sekundärspannung (ue2) in die Klein-Gleichspannung (Uz) zu wandeln.

6. Energieversorgungssystem (1) nach einem der Ansprüche 1 bis 5, **dadurch gekennzeichnet, dass** der Niederspannungs-Aktor (4) Teil einer Kinematik, einer Werkzeugmaschine, oder eines rotativen Motors ist.

7. Energieversorgungssystem (1) nach einem der Ansprüche 1 bis 6, **dadurch gekennzeichnet, dass** der Kleinspannungs-Aktor (6) Teil eines Langstatorlinearmotors ist.

8. Energieversorgungssystem (1) nach einem der Ansprüche 1 bis 6, **dadurch gekennzeichnet, dass** der Kleinspannungs-Aktor (6) Teil eines Planarmotors ist.

9. Energieversorgungssystem (1) nach einem der Ansprüche 1 bis 6, **dadurch gekennzeichnet, dass** der Kleinspannungs-Aktor (6) Teil eines rotativen Kleinspannungs-Motors ist.

10. Energieversorgungssystem (1) nach einem der Ansprüche 1 bis 9, **dadurch gekennzeichnet, dass** eine Mehrzahl Kleinspannungs-Wechselrichter (5) mit zugehörigen Kleinspannungs-Aktoren (6) vorgesehen ist, wobei die erste Mehrzahl Kleinspannungs-Wechselrichter (5) mit dem Gleichspannungswandler (3) verbunden ist, um die Eingangs-Klein-Gleichspannung (Uz) in eine jeweilige Versorgungs-Klein-Wechselspannung (uv2) zu wandeln und jeweils die zugehörigen Kleinspannungs-Aktoren (6) mit der Versorgungs-Klein-Wechselspannung (uv2) zu versorgen.

11. Energieversorgungssystem (1) nach einem der Ansprüche 1 bis 10, **dadurch gekennzeichnet, dass** eine Mehrzahl Niederspannungs-Wechselrichter (2) mit zugehörigen Niederspannungs-Aktoren (4) vorgesehen ist, wobei die zweite Mehrzahl Niederspannungs-Wechselrichter (2) mit dem Gleichrichter (8) verbunden ist, um die Eingangs-Nieder-Gleichspannung (Ue) in eine jeweilige Versorgungs-Nieder-Wechselspannung (uv1) zu wandeln und jeweils die zugehörigen Niederspannungs-Aktoren (4) mit der Versorgungs-Nieder-Wechselspannung (uv1) zu versorgen.

12. Verfahren zur Energieversorgung eines Niederspannungs-Aktors (4) und eines Kleinspannungs-Aktors (6), wobei ein Gleichrichter (8) eine Netz-Wechselspannung (u, v, w) in eine Eingangs-Nieder-Gleichspannung (Ue) wandelt und ein Niederspannungs-Wechselrichter (2) die Eingangs-Nieder-Gleichspannung (Ue) in eine Versorgungs-Nieder-Wechselspannung (uv1) wandelt, um den Niederspannungs-Aktor (4) über die Versorgungs-Nieder-Wechselspannung (uv1) mit Energie zu versorgen, wobei die Eingangs-Nieder-Gleichspannung (Ue) von einem Gleichspannungswandler (3) in eine Klein-Gleichspannung (Uz) gewandelt wird, wobei ein Kleinspannungs-Wechselrichter (5) die Klein-Gleichspannung (Uz) in eine Versorgungs-Klein-Wechselspannung (uv2) wandelt, um den Kleinspannungs-Aktor (6) über die Versorgungs-Klein-Wechselspannung (uv2) mit Energie zu versorgen, **dadurch gekennzeichnet, dass** überschüssige Energie vom Kleinspannungs-Aktor (6) über den bidirektional ausgeführten Kleinspannungs-Wechselrichter (5), den bidirektional ausgeführten Gleichspannungswandler (3) und über den bidirektional ausgeführten Niederspannungs-Wechselrichter (2) in den Niederspannungs-Aktor (4) oder überschüssige Energie vom Niederspannungs-Aktor (4) über den bidirektional ausgeführten Niederspannungs-Wechselrichter (2), den bidirektional ausgeführten Gleichspannungswandler (3) und den bidirektional ausgeführten Kleinspannungs-Wechselrichter (5) in den Kleinspannungs-Aktor 4 umgespeist wird.

13. Verfahren nach Anspruch 12, **dadurch gekennzeichnet, dass** überschüssige Energie am Kleinspannungs-Aktor (6) über den Kleinspannungs-Wechselrichter (5), den Gleichspannungswandler (3) und über den Niederspannungs-Wechselrichter (2) und über den Gleichrichter (8) in ein Energieversorgungsnetz gespeist wird.

14. Verfahren nach Anspruch 12 oder 13, **dadurch gekennzeichnet, dass** überschüssige Energie am Niederspannungs-Aktor (4) über den Niederspannungs-Wechselrichter (2), über den Gleichspannungswandler (3) und über den Kleinspannungs-Wechselrichter (5) und über den Gleichrichter (8) in ein Energieversorgungsnetz gespeist wird.

## Claims

1. Power supply system (1), comprising a rectifier (8), a low voltage inverter (2), and a low voltage actuator (4), the rectifier (8) being configured to convert a mains AC voltage (u, v, w) into a low input DC voltage (Ue), the low voltage inverter (2) being connected to the rectifier (8) and configured to convert the low input DC voltage (Ue) into a low supply AC voltage (uv1), and the low voltage inverter (2) being connected to the low voltage actuator (4) to supply the low voltage actuator (4) with power via the low supply AC voltage (uv1), wherein a DC-DC converter (3) is provided, being connected to the rectifier (8) and configured to convert the low input DC voltage (Ue) into an extra-low DC voltage (Uz), wherein an extra-low voltage inverter (5) is provided, which is connected to the same DC-DC converter (3) and configured to convert the extra-low DC voltage (Uz) into an extra-low supply AC voltage (uv2), wherein the extra-low voltage inverter (5) is connected to an extra-low voltage actuator (6) to supply the extra-low voltage actuator (6) with power via the extra-low supply AC voltage (uv2), **characterized in that** the extra-low voltage inverter (5), the DC-DC converter (3) and the low voltage inverter (2) are bidirectional and are configured to transfer excess energy from the extra-low-voltage actuator (6) to the low-voltage actuator (4) or from the low-voltage actuator (4) to the extra-low-voltage actuator (6).

2. Power supply system (1) according to claim 1, **characterized in that** the DC-DC converter (3) is connected to the low voltage inverter (2) via a supply connection (10) to supply the low voltage inverter (2) with operating power via the extra-low DC voltage (Uz).

3. Power supply system (1) according to either claim 1 or claim 2, **characterized in that** the DC-DC converter (3) is an integral component of the rectifier (8).

4. Power supply system (1) according to any of claims 1 to 3, **characterized in that** the DC-DC converter (3) is designed to be insulated.

5. Power supply system (1) according to any of claims 1 to 4, **characterized in that** the DC-DC converter (3) comprises an inverter unit (30) for converting the low input DC voltage (Ue) into a primary voltage (ue1), **in that** the DC-DC converter (3) comprises a transformer unit (31) which is connected to the inverter unit (30) to transform the primary AC voltage (ue1) into a secondary AC voltage (ue2), **and in that** the DC-DC converter (3) comprises a rectifier unit (32) which is connected to the transformer unit (31) to convert the secondary voltage (ue2) into the extra-low DC voltage (Uz).

6. Power supply system (1) according to any of claims 1 to 5, **characterized in that** the low voltage actuator (4) is part of a kinematics system, a machine tool, or a rotary motor.

7. Power supply system (1) according to any of claims 1 to 6, **characterized in that** the extra-low voltage actuator (6) is part of a long-stator linear motor.

8. Power supply system (1) according to any of claims 1 to 6, **characterized in that** the extra-low voltage actuator (6) is part of a planar motor.

9. Power supply system (1) according to any of claims 1 to 6, **characterized in that** the extra-low voltage actuator (6) is part of a rotary extra-low voltage motor.

10. Power supply system (1) according to any of claims 1 to 9, **characterized in that** a first plurality of extra-low voltage inverters (5) with associated extra-low voltage actuators (6) is provided, the first plurality of extra-low voltage inverters (5) being connected to the DC-DC converter (3) to convert the extra-low input DC voltage (Uz) into respective extra-low supply AC voltages (uv2) and supply each associated extra-low voltage actuator (6) with the extra-low supply AC voltage (uv2).

11. Power supply system (1) according to any of claims 1 to 10, **characterized in that** a second plurality of low voltage inverters (2) with associated low voltage actuators (4) is provided, the second plurality of low voltage inverters (2) being connected to the rectifier (8) to convert the low input DC voltage (Ue) into respective low supply AC voltages (uv1) and supply each associated low voltage actuator (4) with the low supply AC voltage (uv1).

12. Method for supplying power to a low voltage actuator (4) and an extra-low voltage actuator (6), wherein a rectifier (8) converts a mains AC voltage (u, v, w) of a power supply network into a low input DC voltage (Ue) and a low voltage inverter (2) converts the low input DC voltage (Ue) into a low supply AC voltage (uv1) to supply the low voltage actuator (4) with power via the low supply AC voltage (uv1), wherein the low input DC voltage (Ue) is converted into an extra-low DC voltage (Uz) by a DC-DC converter (3), wherein an extra-low voltage inverter (5) converts the extra-low DC voltage (Uz) into an extra-low supply AC voltage (uv2) to supply the extra-low voltage actuator (6) with power via the extra-low supply AC voltage (uv2) **characterized in that** excess energy from the extra-low-voltage actuator (6) is transferred via the bidirectional extra-low voltage inverter (5), the bidirectional DC-DC converter (3) and the bidirectional low voltage inverter (2) to the low-voltage actuator (4), or excess energy from the low-voltage actuator (4) is transferred via the bidirectional extra-low voltage inverter (5), the bidirectional DC-DC converter (3) and the bidirectional low voltage inverter (2) to the extra-low-voltage actuator (6).

13. Method according to claim 12, **characterized in that** excess power at the extra-low voltage actuator (6) is fed via the extra-low voltage inverter (5), the DC-DC converter (3), and the low voltage inverter (2) to a low voltage actuator (4), and via the rectifier (8) to a power supply network.

14. Method according to either claim 12 or claim 13, **characterized in that** excess power at the low voltage actuator (4) is fed via the low voltage inverter (2), via the DC-DC converter (3) and via the extra-low voltage inverter (5) and via the rectifier (8) to a power supply network.

## Revendications

1. Système d'alimentation en énergie (1) comprenant un redresseur (8), un onduleur basse tension (2) et un actionneur basse tension (4), le redresseur (8) étant configuré pour convertir une tension alternative de réseau (u, v, w) en une tension continue basse d'entrée (Ue), l'onduleur basse tension (2) étant relié au redresseur (8) et étant configuré pour convertir la tension continue basse d'entrée (Ue) en une tension alternative basse d'alimentation (uv1), et l'onduleur basse tension (2) étant relié à l'actionneur basse tension (4) pour alimenter en énergie l'actionneur basse tension (4) par la tension alternative basse d'alimentation (uv1), un convertisseur de tension continue (3) étant prévu, lequel est relié au redresseur (8) et est configuré pour convertir la tension continue basse d'entrée (Ue) en une tension continue faible (Uz), un onduleur faible tension (5) étant prévu, lequel est relié au convertisseur de tension continue (3) et est configuré pour convertir la tension continue faible (Uz) en une tension alternative faible d'alimentation (uv2), l'onduleur faible tension (5) étant relié à un actionneur faible tension (6) pour alimenter en énergie l'actionneur faible tension (6) par la tension alternative faible d'alimentation (uv2), **caractérisé en ce que** l'onduleur faible tension (5), le convertisseur de tension continue (3) et l'onduleur basse tension (2) sont conçus de manière bidirectionnelle et sont prévus pour transférer de l'énergie excédentaire de l'actionneur faible tension (6) à l'actionneur basse tension (4) ou de l'actionneur basse tension (4) à l'actionneur faible tension (6).

2. Système d'alimentation en énergie (1) selon la revendication 1, **caractérisé en ce que** le convertisseur de tension continue (3) est relié par une liaison d'alimentation (10) à l'onduleur basse tension (2) pour alimenter en énergie de fonctionnement l'onduleur basse tension (2) par la tension continue faible (Uz).

3. Système d'alimentation en énergie (1) selon la revendication 1 ou 2, **caractérisé en ce que** le convertisseur de tension continue (3) fait partie intégrante du redresseur (8).

4. Système d'alimentation en énergie (1) selon l'une des revendications 1 à 3, **caractérisé en ce que** le convertisseur de tension continue (3) est conçu de manière isolée.

5. Système d'alimentation en énergie (1) selon l'une des revendications 1 à 4, **caractérisé en ce que** le convertisseur de tension continue (3) comprend un ensemble onduleur (30) pour convertir la tension continue basse d'entrée (Ue) en une tension primaire (ue1), que le convertisseur de tension continue (3) comprend un ensemble de transformation (31) qui est relié à l'ensemble onduleur (30) pour transformer la tension alternative primaire (ue1) en une tension alternative secondaire (ue2), et que le convertisseur de tension continue (3) comprend un ensemble redresseur (32), qui est relié à l'ensemble de transformation (31) pour convertir la tension secondaire (ue2) en la tension continue faible (Uz).

6. Système d'alimentation en énergie (1) selon l'une des revendications 1 à 5, **caractérisé en ce que** l'actionneur basse tension (4) fait partie d'une cinématique, d'une machine-outil ou d'un moteur rotatif.

7. Système d'alimentation en énergie (1) selon l'une des revendications 1 à 6, **caractérisé en ce que** l'actionneur faible tension (6) fait partie d'un moteur linéaire à stator long.

8. Système d'alimentation en énergie (1) selon l'une des revendications 1 à 6, **caractérisé en ce que** l'actionneur faible tension (6) fait partie d'un moteur plan.

9. Système d'alimentation en énergie (1) selon l'une des revendications 1 à 6, **caractérisé en ce que** l'actionneur faible tension (6) fait partie d'un moteur faible tension rotatif.

10. Système d'alimentation en énergie (1) selon l'une des revendications 1 à 9, **caractérisé en ce qu'**est prévue une multitude d'onduleurs faible tension (5) avec des actionneurs faible tension (6) associés, la première multitude d'onduleurs faible tension (5) étant reliée au convertisseur de tension continue (3) pour convertir la tension continue faible d'entrée (Uz) en une tension alternative faible d'alimentation (uv2) respective et pour alimenter respectivement les actionneurs faible tension (6) respectifs avec la tension alternative faible d'alimentation (uv2).

11. Système d'alimentation en énergie (1) selon l'une des revendications 1 à 10, **caractérisé en ce qu'**est prévue une multitude d'onduleurs basse tension (2) avec des actionneurs basse tension (4) associés, la deuxième multitude d'onduleurs basse tension (2) étant reliée au redresseur (8) pour convertir la tension continue basse d'entrée (Ue) en une tension alternative basse d'alimentation (uv1) respective et pour alimenter respectivement les actionneurs basse tension (4) associés avec la tension alternative basse d'alimentation (uv1).

12. Procédé d'alimentation en énergie d'un actionneur basse tension (4) et d'un actionneur faible tension (6), un redresseur (8) convertissant une tension alternative de réseau (u, v, w) en une tension continue basse d'entrée (Ue) et un onduleur basse tension (2) convertissant la tension continue basse d'entrée (Ue) en une tension alternative basse d'alimentation (uv1) pour alimenter en énergie l'actionneur basse tension (4) par la tension alternative basse d'alimentation (uv1), la tension continue basse d'entrée (Ue) étant convertie par un convertisseur de tension continue (3) en une tension continue faible (Uz), un onduleur faible tension (5) convertissant la tension continue faible (Uz) en une tension alternative faible d'alimentation (uv2) pour alimenter en énergie l'actionneur faible tension (6) par la tension alternative faible d'alimentation (uv2), **caractérisé en ce que** de l'énergie excédentaire provenant de l'actionneur faible tension (6) est réinjectée dans l'actionneur basse tension (4) par l'onduleur faible tension (5) réalisé de manière bidirectionnelle, le convertisseur de tension continue (3) réalisé de manière bidirectionnelle et par l'onduleur basse tension (2) réalisé de manière bidirectionnelle ou de l'énergie excédentaire provenant de l'actionneur basse tension (4) est réinjectée dans l'actionneur faible tension (4) par l'onduleur basse tension (2) réalisé de manière bidirectionnelle, le convertisseur de tension continue (3) réalisé de manière bidirectionnelle et l'onduleur faible tension (5) réalisé de manière bidirectionnelle.

13. Procédé selon la revendication 12, **caractérisé en ce que** de l'énergie excédentaire sur l'actionneur faible tension (6) est injectée dans un réseau d'alimentation en énergie par l'onduleur faible tension (5), le convertisseur de tension continue (3) et par l'onduleur basse tension (2) et par le redresseur (8).

14. Procédé selon la revendication 12 ou 13, **caractérisé en ce que** de l'énergie excédentaire sur l'actionneur basse tension (4) est injectée dans le réseau d'alimentation en énergie par l'onduleur basse tension (2), par le convertisseur de tension continue (3) et par l'onduleur faible tension (5) et par le redresseur (8).
